# EUROPÄISCHE PATENTSCHRIFT

(11) **EP 0 457 005 B1**
(45) Veröffentlichungstag und Bekanntmachung des Hinweises auf die Patenterteilung: **12.06.1996**
(21) Anmeldenummer: 91104974.0
(22) Anmeldetag: 28.03.1991
(51) Int. Cl.: C07B 63/04, B01D 53/04, C07C 67/56

(54) **Verfahren und Vorrichtung zum Entfernen von Säuren aus säurehaltigen, aus Abluft oder Abgasen stammenden organischen Lösemitteln oder Lösemittelgemischen**
Process and device for removal of acids from organic acid containing solvents or solvent mixtures originating from waste air or gas
Procédé et dispositif pour séparer des acides d'air ou de gaz d'échappement provenant de mélanges de solvants organiques contenant des acides

(30) Priorität: 14.05.1990 DE 4015427; 18.01.1991 DE 4101360
(43) Veröffentlichungstag der Anmeldung: 21.11.1991
(73) Patentinhaber: Deutsche Solvay-Werke Gesellschaft mit beschränkter Haftung, 30173 Hannover (DE); ALKOR GMBH KUNSTSTOFFE, D-81451 München (DE)
(72) Erfinder: Dilla, Wolfgang, Dr., W-4134 Rheinberg 1 (DE); Wnuck, Hans-Jürgen, W-4132 Kamp-Lintfort (DE); Sirlereaux, Serge, W-8026 Ebenhausen (DE)
(74) Vertreter: Lauer, Dieter, Dr.

(56) Entgegenhaltungen:
- EP-A- 0 007 387
- FR-A- 2 278 830
- PATENT ABSTRACTS OF JAPAN vol. 4, no. 159 (C-30)(641) 6 November 1980
- PATENT ABSTRACTS OF JAPAN vol. 11, no. 141 (C-421)(2588) 8 Mai 1987
- E. Fitzer, W. Fritz "Technische Chemie", Springer-Verlag, N.Y., Heidelberg, Berlin (1975), Seiten 68 und 69
- Lexikon der Hüttentechnik,Deutsche Verlagsanstalt Stuttgart, Band 5,(1963),Seiten 381 und 382

## Beschreibung

Die vorliegende Erfindung betrifft ein Verfahren und eine Vorrichtung zum Entfernen von Säuren aus organischen Lösemitteln oder Lösemittelgemischen, die aus Abluft oder Abgasen stammen, durch Kontakt mit alkalischen Reagenzien, wobei carbonsäurehaltige und chlorkohlenwasserstofffreie oder -arme organisch-chemische Lösemittel oder Lösemittelgemische mit gegenüber Säuren reaktiv und/oder adsorptiv wirkenden Calciumverbindungen und/oder Aminen und/oder quaternären Ammoniumverbindungen in feinverteilter oder gelöster Form behandelt oder vermischt und das organisch-chemische Lösemittel oder organisch-chemische Lösemittelgemisch abgetrennt wird.

In der DE-OS 2 833 548 und DE-OS 2 833 586 wird bereits ein Neutralisationsverfahren für bestimmte Chlorkohlenwasserstoffe beschrieben, wobei als Neutralisationsmittel für die entstehende Salzsäure Magnesiumoxid mit einer bestimmten Korngröße dient, das Vorzugsweise als Formkörper eingesetzt wird.

Die Verwendung von Magnesiumoxid ist nur bei Lösungsmitteln mit starken Mineralsäuren, insbesondere Salzsäure oder Chlorwasserstoff und bei bestimmten Chlorkohlenwasserstoffen zweckmäßig, da die Umsetzungsgeschwindigkeit keine wirtschaftlich industrielle Produktion bei anderen organischen Säuren ermöglicht.

In der DE-OS 2 833 548 und 2 833 586 wurde weiterhin Vorgeschlagen, das Magnesiumoxid als Festbett einzusetzen, was noch ungünstigere Verweil- und Umsetzungszeiten bei der Entfernung von Carbonsäuren erforderlich macht. Weiterhin wird der theoretisch mögliche Umsatz des Magnesiumoxides innerhalb dieses Verfahrens nur ungenügend erreicht.

Verwendet man dagegen für die Entsäuerung organischer Lösungsmittel Alkalimetallhydroxide, so besteht die Gefahr ungewünschter Nebenreaktionen, insbesondere in Gegenwart von Aldehyden, Ketonen, und/oder Estern, die zu einer Änderung der Zusammensetzung und der Eigenschaft des organischen Lösungsmittels oder Lösungsmittelgemisch führen.

In der JP-A-55 104 230 wird ein Verfahren zum Entfernen von Essigsäure aus organischen Lösemitteln beschrieben, wobei das zu behandelnde Lösemittel eine mit CaCO₃ gefüllte Säule in vertikaler Richtung durchläuft. Dieses Verfahren ist jedoch nur für die Entfernung von geringen Säuremengen und nicht für die Behandlung industrieller Mengen geeignet.

Der Erfindung liegt die Aufgabe zugrunde, die vorgenannte Nachteile zu vermeiden und ein verbessertes Verfahren und eine Vorrichtung zur Verfügung zu stellen, das bzw. die eine sichere und wirtschaftliche Entfernung von Carbonsäuren sowie ggf. Wasser aus organischen chlorkohlenwasserstofffreien oder chlorkohlenwasserstoffarmen Lösemitteln oder Lösemittelgemischen gewährleistet.

Weiterhin sollte das Verfahren möglichst abwasserfrei oder abwasserarm betrieben werden können. Der Wiedereinsatz der zurückgewonnenen Lösemittel in den Produktionsbetrieb sollte ermöglicht werden. Es sollte daher ein nur noch geringer Säure- und Wassergehalt in den behandelten Lösemitteln nach der Behandlung vorliegen.

Erfindungsgemäß wurde festgestellt, daß diesen Zielen und Aufgaben ein Verfahren zum Entfernen von Säuren aus Lösemitteln oder Aufarbeiten säurehaltiger organischer Lösemittel oder Lösemittelgemische, die aus Abluft oder Abgasen stammen, durch Kontakt mit alkalischen Reagenzien gerecht wird. Gemäß der Erfindung werden carbonsäurehaltige und chlorkohlenwasserstofffreie oder -arme organische Lösemittel oder Lösemittelgemische mit gegenüber Säuren reaktiv und/oder adsorptiv wirkenden Calciumverbindungen, die ein Löslichkeitsprodukt (gemessen in Wasser bei Raumtemperatur) von mehr als (1,0 ± 0,5) x 10⁻¹¹, vorzugsweise von mehr als (1,0 ± 0,5) x 10⁻⁸ aufweisen, und/ oder Aminen und/oder quaternären Ammoniumverbindunden in feinverteilter oder gelöster Form vermischt und das organische Lösemittel oder organische Lösemittelgemisch abgetrennt. Besonders bevorzugt werden Calciumverbindungen mit einem Löslichkeitsprodukt (gemessen in Wasser bei Raumtemperatur) von (5,0 ± 2,0) x 10⁻⁶ eingesetzt.

Die Reaktion oder Adsorption der Carbonsäuren wird bei Temperaturen im Bereich zwischen + 10 °C und dem Siedepunkt des organischen Lösungsmittels oder des oder der niedrig siedenden organischen Lösungsmittel oder des Lösungsmittelgemisches, Vorzugsweise über + 15 °C und unter + 120 °C durchgeführt wird, wobei Vorzugsweise aus dem von den Carbonsäuren gereinigten Lösungsmittel oder Lösungsmittelgemisch unmittelbar, nachfolgend oder nach Zwischenlagerung ein Teil des Wassers entfernt wird.

Nach dem erfindungsgemäßen Verfahren wird dem Lösemittel oder Lösemittelgemisch, bezogen auf die Konzentration der anwesenden Säure und/oder Säuren, das alkalische Reagenz bestehend aus Calciumverbindungen Aminen und/oder quaternären Ammoniumverbindungen in der 1,05 bis 10fachen stöchiometrischen Menge, Vorzugsweise in der 1,1 bis 4fachen stöchiometrischen Menge zugesetzt und/oder in einer derartigen Menge zugesetzt, daß das Lösemittel oder Lösemittelgemisch nach der Destillation eine Acidität zwischen < 0,01 bis 10 meq H⁺/dm³, vorzugsweise < 0,1 bis 2 meq H⁺/dm³ aufweist.

Während oder nach der Entfernung der Carbonsäuren wird gemäß der Erfindung die Trocknung (Wasserentfernung oder Reduktion des Wassergehaltes) des Lösemittels oder Lösemittelgemisches durch mindestens eine azeotrope Destillation und/oder Pervaporation und/oder durch eine Sorption in einem derartigen Umfang durchgeführt, daß nach der Trocknung des Lösemittels oder Lösemittelgemisches der Endwassergehalt desselben zwischen 0,0001 bis 3,0 Mas.-%, vorzugsweise zwischen 0,001 bis 0,1 Mas.-% liegt.

Nach einer bevorzugten Ausführungsform besteht das alkalische Reagenz aus Calciumoxid, Calciumhydroxid, Calciumacetat und/oder Gemischen aus Calciumoxid und/oder Calciumhydroxid und/oder Calciumacetat und Calciumcarbonat, Dolomit, gebranntem Dolomit und/oder Gemischen oder festen Lösungen aus einem oder mehreren dieser Erdalkalimetallverbindungen und/oder aus mindestens einem Amin und/oder einer quaternären Ammoniumverbindung, wobei die Korngröße der im festen Zustand eingesetzten alkalischen Reagenzien kleiner als 500 µm, Vorzugsweise kleiner als 100 µm ist und/oder es werden diese Verbindungen mit einer spezifischen Oberfläche eingesetzt, die über 0,5 m²/g, vorzugsweise über 20 m²/g, liegt.

Nach einer bevorzugten Ausführungsform des erfindungsgemäßen Verfahrens wird vor der Entfernung der Säuren, Vorzugsweise Carbonsäuren, das organische Lösemittel oder Lösemittelgemisch und/oder das alkalische Reagenz so eingestellt oder Verwendet, daß der Gesamtwassergehalt des säurehaltigen Lösemittels (berechnet einschließlich des alkalischen Reagenz) mehr als 0,001 Mas.-%, vorzugsweise 0,0015 bis 2,0 Mas.-%, beträgt, wobei die Einstellung vorzugsweise durch Zugabe einer zur Einstellung dieser Massenkonzentration erforderlichen Wassermenge und vorzugsweise bei Verwendung mindestens einer Calciumverbindung als alkalisches Reagenz erfolgt, wobei bevorzugt das zuzufügende Wasser aus der bei der azeotropen Destillation und/oder Pervaporation abgetrennten Wasserphase stammt oder verwendet wird.

Das Lösemittel oder Lösemittelgemisch wird vorzugsweise in Gegenwart mindestens eines alkalischen Reagenz abdestilliert.

Bevorzugt wird die Destillation des Lösemittels oder Lösemittelgemisches bei einem Druck von über 0,01 mbar, vorzugsweise 30 bis 1013 mbar, durchgeführt.

Die Reaktionszeit innerhalb des Rührvorganges vor der Destillation liegt nach einer bevorzugten Ausführungsform zwischen 0,08 bis 24 Stunden, vorzugsweise zwischen 0,25 bis 2,5 Stunden.

Das als alkalisches Reagenz nach einer bevorzugten Ausführungsform verwendete Amin ist aus der Gruppe der Amine der allgemeinen Formel 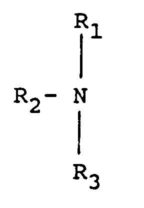
mit folgenden Restgruppen ausgewählt:

R₁ = R₂ = R₃ = CₙH₂ₙ₊₁ mit 3 ≦n ≦18

R₁ = CH₃, R₂ = R₃ = CₙH₂ₙ₊₁ mit 3 ≦n ≦18

R₁ = R₂ = R₃ = CₙH₂ₙOH mit 2 ≦n ≦3

R₁ = R₂ = R₃ = CH₂CH(OH)CH₃

R₁ = R₂ = R₃ = CH₂CH(OH)CH₂OH

R₁ = R₂ = CₙH₂ₙ₊₁ mit 3 ≦n ≦4, R₃ = CₙH₂ₙOH mit 2 ≦n ≦3

R₁ = CₙH₂ₙ₊₁ mit n = 4, R₂ = R₃ = CₙH₂ₙOH mit 2 ≦n ≦3

R₁ = R₂ = H, R₃ = CH₂-CH(OH) - CH₂ NH₂.

Als Amine werden vorteilhaft Tributylamin, Tripentylamin, Trihexylamin, Triheptylamin, Trioctylamin, Triethanolamin und Tripropanolamine eingesetzt.

Gemäß der vorliegenden Erfindung können auch primäre oder sekundäre Amine eingesetzt werden.

Als quaternäre Ammoniumverbindungen werden tetrasubstituierte Ammoniumhydroxide, vorzugsweise Tetra-n-butyl-Ammoniumhydroxid, eingesetzt.

Gemäß einer besonders vorteilhaften Ausführungsform des erfindungsgemäßen Verfahrens wird als alkalisches Reagens ein Gemisch aus
A) Calciumhydroxid und/oder Calciumoxid und
B) Triethanolamin
verwendet, wobei das Calciumhydroxid und/oder Calciumoxid in der 0,5 bis 5fachen stöchiometrischen Menge, Vorzugsweise in der 1 bis 3fachen stöchiometrischen Menge,
bezogen auf die Konzentration der anwesenden Säure(n), und das Triethanolamin
in der 0,05 bis 5-fachen stöchiometrischen Menge, vorzugsweise in der 0,1 bis 3fachen stöchiometrischen Menge,
bezogen auf die Konzentration der anwesenden Säure(n), zugesetzt wird, wobei die Summe der beiden stöchiometrischen Faktoren gleich oder größer als 3 ist (f _{Calciumhydroxid/Calciumoxid} + f _{Triethanolamin} ≧3).

Besonders bevorzugt ist ein Verhältnis von 0,1 stöchiometrische Äquivalente Triethanolamin und 3 stöchiometrische Äquivalente Ca(OH)₂.

Diese Ausführungsform hat den Vorteil, daß die Umsetzung schneller als mit Ca(OH)₂ bzw. CaO allein verläuft und die Anwesenheit von Wasser nicht erforderlich ist. Da mit einer geringeren Menge an Amin gearbeitet wird, ist die zu entsorgende Aminmenge geringer als im Fall der Anwendung von Amin allein. Die genannte Ausführungsform ist von besonderem Interesse bei zu reinigenden Lösungsmitteln mit sehr niedrigem Wassergehalt.

Im Rahmen der Vorliegenden Erfindung werden als organisch Säuren gesättigte und/oder ungesättigte Mono- und/oder Di- und/oder Polycarbonsäuren mit C₁ bis C₂₂, vorzugsweise CₙH₂ₙ₊₁ COOH (n = 0 bis 18), HOOC-(CH₂)ₙ-COOH(n = 0 bis 10 ) und/oder Acrylsäure, Methacrylsäure, Crotonsäure, Ölsäure, Maleinsäure, Fumarsäure, Benzoesäure, Phthalsäure und/oder Substitutionsprodukte oder Derivate dieser Säuren, bei denen mindestens ein Wasserstoffatom der Kohlenstoffkette (des Säurerestes) substituiert ist, aus organischen Lösemitteln oder Lösemittelgemischen, die Vorzugsweise Aldehyde, Ketone, Ether, Ester, Alkohole und/oder Kohlenwasserstoffe enthalten oder daraus bestehen, umgesetzt und abgetrennt, indem gegenüber diesen Säuren reaktiv wirkende Calciumverbindungen in Gegenwart eines bestimmten Wassergehaltes und/oder mindestens ein Amin oder mindestens eine quaternäre Ammoniumverbindung zugefügt und bei Temperaturen über + 10 °C, vorzugsweise über + 15 °C, mit der oder den Säure(n) umgesetzt wird bzw. werden. Das organische Lösemittel oder Lösemittelgemisch wird nach einer Temperaturerhöhung von mehr als + 10 °C, vorzugsweise mehr als + 20 °C (gegenüber der Ausgangsreaktionstemperatur) in Gegenwart des im Überschuß zugefügten Reagenz oder der alkalischen Reagenzien abdestilliert und vorzugsweise anschließend oder nach Lagerung zur Verminderung des Wassergehaltes behandelt.

Bevorzugt werden als organische Lösemittel oder Lösemittelgemische solche innerhalb des Verfahrens eingesetzt, die unter Verwendung von Absorptionsmitteln und/oder Adsorptionsmitteln, vorzugsweise Aktivkohle, aus der Abluft oder den Abgasen abgetrennt und anschließend desorbiert wurden.

Die Desorption wird nach einer bevorzugten Ausführungsform unter Erwärmung in Abhängigkeit von dem Druck oder Unterdruck oder durch Wasserdampf und/oder mindestens einem Inertgas, vorzugsweise Stickstoff, durchgeführt, wobei das gasförmige säurehaltige Lösungsmittel oder Lösungsmittelgemisch kondensiert wird und unmittelbar oder nach Zwischenlagerung dem erfindungsgemäßen Verfahren zur Entfernung von Säuren unterworfen wird.

Nach einer weiteren bevorzugten Ausführungsform wird die innerhalb des Verfahrens verwendete oder umgesetzte Calciumverbindung und/oder das Amin einer thermischen Behandlung unterworfen und anschließend wieder als alkalisches Reagenz innerhalb des Verfahrens eingesetzt.

Erfindungsgemäß wird in einem Rührreaktor das zu behandelnde Lösemittel oder Lösemittelgemisch mit - bezogen auf die Konzentration der anwesenden Säuren - der 1,25- bis 3-fachen stöchiometrischen Menge des erfindungsgemäßen pulverförmigen oder flüssigen alkalischen Reagenzes versetzt und bei Raumtemperatur oder bei Temperaturen bis zum Siedepunkt des Lösemittels für eine bestimmte Zeit gut gerührt. Anschließend wird das Lösemittel oder Lösemittelgemisch filtriert oder direkt aus dem Rührreaktor oder in einem Dünnschichtverdampfer destilliert, dann kondensiert, in einem Wasserabscheider von einer möglicherweise anfallenden wäßrigen Phase abgetrennt und danach einem Anlagenteil zur Entfernung des Wassers (z.B. Pervaporation) zugeführt. Die behandelten Lösemittel und Lösemittelgemische sind anschließend wieder für einen Einsatz im Produktionsprozeß geeignet.

Im Rahmen des erfindungsgemäßen Verfahrens gelingt es nicht nur die Säuren sowie gegebenenfalls das Wasser aus dem Lösemittel oder Lösemittelgemisch zu entfernen, sondern auch im Vergleich zu den Lösemitteln oder Lösemittelgemischen höher siedende Verbindungen abzutrennen, die im Produktionsprozeß zu Störungen führen können.

Die Erfindung betrifft ebenfalls eine Vorrichtung zur Durchführung des erfindungsgemäßen Verfahrens. Die Vorrichtung oder Vorrichtungskombination besteht aus einem, mit mindestens einem Brüdenkondensator (4) für das gereinigte, verdampfte Lösemittel oder Lösemittelgemisch, mindestens einem Abscheider (5) für das wasserhaltige Lösemittelgemisch, mindestens einem mit dem Destillatbehälter (8) verbundenen beheizbaren Reaktor (1), mindestens einer Reagenz-Vorlage (2) für das bzw. die zu verwendenden Reagenzien, mindestens einem Zwischenbehälter (6) für aus dem Lösemittel abgeschiedenes Wasser, ggf. mindestens einer Trocknungsvorrichtung (10) sowie mindestens einem Rückstandsbehälter (15).

Der Abscheider (5) für das gereinigte wasserhaltige Lösemittel oder Lösemittelgemisch ist in seinem unteren Teil über eine Rohrleitung mit dem Zwischenbehälter (6) und in seinem oberen Teil mit dem Destillatbehälter (8) für das reine Lösemittel oder Lösemittelgemisch verbunden.

An dem Reaktor ist mindestens eine Heizvorrichtung und eine Kühlvorrichtung angeordnet und der Reaktor besitzt mindestens eine Rührvorrichtung.

Nach einer bevorzugten Ausführungsform ist mindestens eine Dosiervorrichtung an dem Reaktor (1), dem Reagenz-Vorlage-Behälter (2) und/oder an mindestens einer zwischen diesen befindlichen Rohrleitung angeordnet.

Zwischen der Trocknungsvorrichtung (10) und dem Zwischenbehälter (6) ist ebenfalls mindestens eine Rohrleitung angeordnet, damit das in der Trocknungseinrichtung (10) aus dem Lösemittel entfernte Wasser in den Zwischenbehälter (6) geleitet werden kann.

Auch der Zwischenbehälter (6) ist über mindestens eine Rohrleitung mit dem Reaktor (1) verbunden.

Die Verwendung der nach dem Verfahren ganz oder teilweise umgesetzten Erdalkalimetallverbindung zur Rauchgasreinigung z.B. zur Rauchgasentschwefelung ist möglich.

Ebenso ist die Verwendung des nach dem Verfahren anfallenden Destillationsrückstandes, bestehend aus Lösemitteln oder Lösemittelgemisch und ganz oder teilweise umgesetzten Erdalkalimetallverbindungen oder Aminen zur Energiegewinnung in Verbrennungsanlagen möglich.

Als chlorkohlenwasserstoffarme Lösemittel werden solche organische Lösemittel oder Lösemittelgemische verstanden, die einen Chlorkohlenwasserstoffgehalt von unter 25 Mas.-% (bezogen auf 100 Mas.-% Lösemittel oder Lösemittelgemisch), vorzugsweise unter 8 Mas.-%, enthalten. Bevorzugt werden chlorkohlenwasserstofffreie Lösemittel oder solche mit einem Chlorkohlenwasserstoffgehalt unter 3 Mas.-% eingesetzt.

### Beispiele

### Beispiel 1:

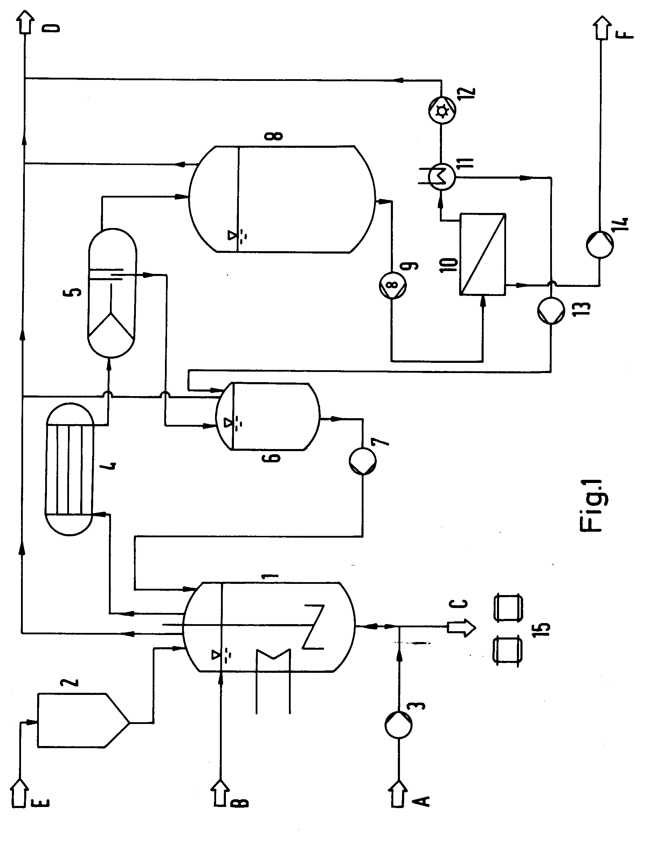

In einer Abluftreinigungsanlage auf Basis von Aktivkohle fällt bei der Desorption der Aktivkohle ein Lösemittelgemisch an. Zu 100 dm³ dieses Lösemittelgemisches bestehend aus 74 Vol.-% Ketonen mit C₄ bis C₆, 23 Vol.-% Carbonsäureestern mit C₄, 1,5 Vol.% aromatischen Kohlenwasserstoffen, mit einer Acidität von 95 meq H⁺/dm³ (hervorgerufen durch organische Carbonsäuren, insbesondere Essigsäure, Propionsäure, Isobuttersäure, Isovaleriansäure) und einem Wassergehalt von 1,5 Mas.-% werden 750 g pulverförmiges Calciumhydroxid mit einer spezifischen Oberfläche von 25 m²/g gegeben und 15 Minuten bei Raumtemperatur gut durchmischt. Anschließend wird das Lösemittelgemisch in Gegenwart des Calciumhydroxids abdestilliert. Die kondensierte organische Phase des Destillates hat eine Acidität von 1,5 meq H⁺/dm³ und einen Wassergehalt von 1 Mas.-%. Die wäßrige Phase des Destillates wird in einem Wasserabscheider abgetrennt. Anschließend wird die organische Phase des Destillates einer Pervaporationsanlage zugeführt. Das Retentat der Pervaporationsanlage hat einen Wassergehalt von < 0,1 Mas.-% und wird in den Produktionsprozeß zurückgeführt. Die Durchführung des Verfahrens erfolgte in der erfindungsgemäßen Vorrichtung gemäß Fig. 1.

### Beispiel 2:

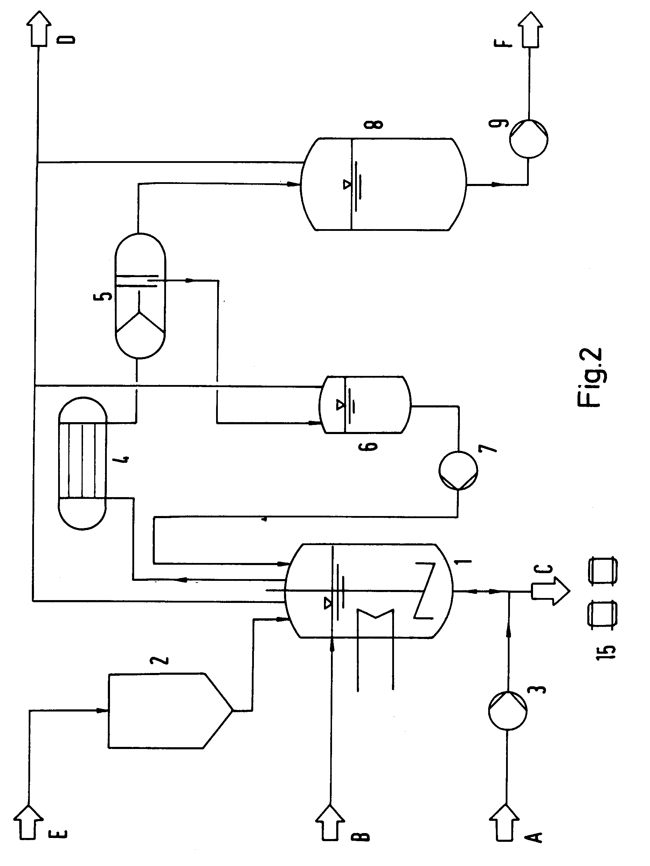

In einer Abluftreinigungsanlage auf Basis von Aktivkohle fällt bei der Desorption von Aktivkohle ein Lösemittelgemisch an. Zu 400 cm³ dieses Lösemittelgemisches bestehend aus 74 Vol.-% Ketonen mit C₄ bis C₆, 23 Vol.-% Carbonsäureestern mit C₄, 1,5 Vol.% aromatischen Kohlenwasserstoffen, mit einer Acidität von 61 meq H⁺/dm³ (hervorgerufen durch organische Carbonsäuren, insbesondere Essigsäure, Propionsäure, Isobuttersäure, Isovaleriansäure) und einem Wassergehalt von 0,1 Mas.-% werden 11 g Triethanolamin gegeben und 15 Minuten bei Raumtemperatur gut durchmischt. Anschließend wird das Lösemittelgemisch bei einem Druck von 100 mbar abdestilliert. Die kondensierte organische Phase des Destillates hat eine Acidität von < 0,5 meq H⁺/dm³. Eine Trocknung des Lösemittelgemisches und somit die Einschaltung einer Trocknungsvorrichtung (Pervaporationsvorrichtung) war auf Grund des niedrigen Ausgangswassergehaltes nicht erforderlich. Ohne Einsatz des Triethanolamins, unter sonst gleichen Versuchsbedingungen, wird ein Destillat mit einer Acidität von 58 meq H⁺/dm³ erhalten. Die Durchführung dieses Verfahrens erfolgte in der erfindungsgemäßen Vorrichtung gemäß Fig. 2.

### Beispiel 3:

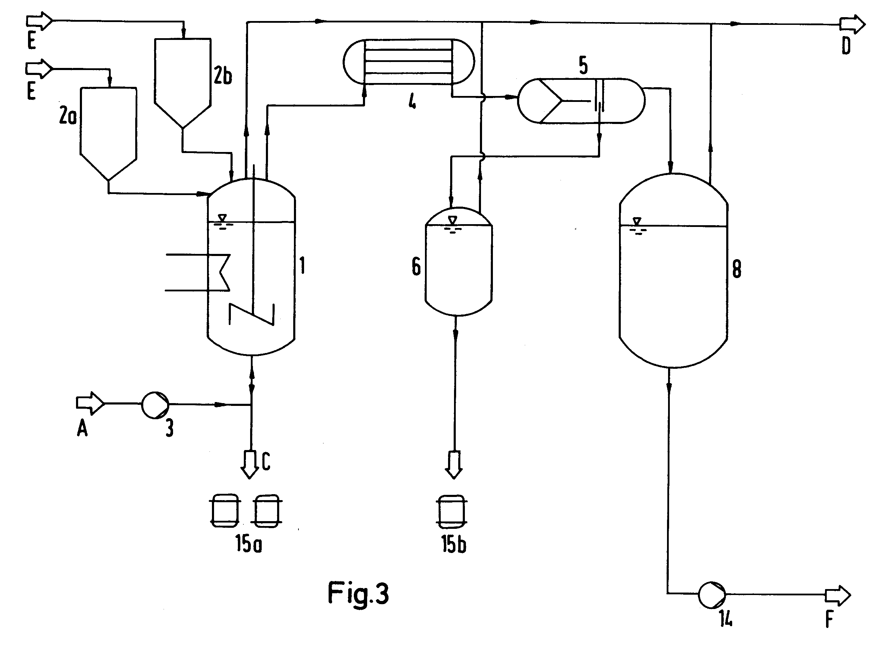

In einer Abluftreinigungsanlage auf Basis von Aktivkohle fällt bei der Desorption der Aktivkohle ein Lösemittelgemisch an. Zu 100 dm³ dieses Lösemittelgemisches, bestehend aus 74 Vol-% Ketonen mit C₄ bis C₆, 23 Vol.-% Carbonsäureestern mit C₄, 1,5 Vol.-% aromatischen Kohlenstoffen mit einer Acidität von 75 meq H⁺/dm³ (hervorgerufen durch organische Carbonsäuren, insbesondere Essigsäure, Propionsäure, Isobubuttersäure, Isovaleriansäure) und einem Wassergehalt von < 0,1 Mas.-% werden 920 g eines Gemisches aus Calciumhydroxid und Triethanolamin (0,1fache stöchiometrische Menge Amin und 3,0fache stöchiometrische Menge Calciumhydroxid, bezogen auf die Konzentration der anwesenden Säure; Summe der beiden stöchiometrischen Faktoren : 3,1) gegeben und 15 Minuten bei Raumtemperatur gut durchmischt. Anschließend wird das Lösemittelgemisch bei einem Druck von 100 mbar abdestilliert. Die kondensierte organische Phase des Destillates weist eine Acidität von < 2 meq H⁺/dm³ auf. Eine Trocknung des Lösemittelgemisches war aufgrund des niedrigen Ausgangswassergehaltes nicht erforderlich. Die Durchführung des Verfahrens erfolgte in der erfindungsgemäßen Vorrichtung gemäß Fig. 3.

In den beigefügten Zeichnungen ist die erfindungsgemäße Vorrichtung schematisch dargestellt. Die Vorrichtung gemäß Fig. 1 besteht aus mindestens einem Brüdenkondensator (4) für das gereinigte, verdampfte Lösemittel oder Lösemittelgemisch, mindestens einem Abscheider (5) für das wasserhaltige Lösemittelgemisch, mindestens einem mit dem Destillatbehälter (8) verbundenen beheizbaren Reaktor (1), mindestens einer Reagenzvorlage (2) für das bzw. die zu verwendenden Reagenzien, mindestens einem Zwischenbehälter (6) für aus dem Lösemittel abgeschiedenes Wasser, mindestens einer Trocknungsvorrichtung (10) sowie mindestens einem Rückstandsbehälter (15), wobei der Abscheider (5) für das gereinigte wasserhaltige Lösemittel oder Lösemittelgemisch in seinem unteren Teil über eine Rohrleitung mit dem Zwischenbehälter (6) und in seinem oberen Teil mit dem Destillatbehälter (8) für das reine Lösemittel oder Lösemittelgemisch verbunden ist.

Über eine Pumpe oder ähnliche Fördervorrichtung (3) wird das Rohprodukt in Form des säurehaltigen Lösungsmittel oder Lösemittelgemisches (A) eingeführt. Das Prozeßwasser (B) ist zur Steuerung des Verfahrens und zur Einhaltung eines bestimmten Wassergehaltes erforderlich. Der Rückstand (C) wird aus dem Reaktor gemäß der schematischen Zeichnung entfernt und gelangt in den Rückstandsbehälter (15) oder wird weiter verarbeitet, gelagert oder zu anderen Verfahren eingesetzt. Das Reagenz (E) in Form der gegenüber Säuren reaktiv und/oder adsorptiv wirkenden Calciumverbindungen, calciumhaltigen Verbindungen, Aminen oder quaternären Ammoniumverbindungen wird in den Vorlagebehälter oder in die Reagenzvorlage (2) eingeführt. Gewinnung, Ableitung, Abfüllung und dgl. des Endproduktes (F) erfolgt vorzugsweise unter Verwendung von Pumpen oder ähnlichen Fördervorrichtungen, insbesondere einer Retentat-Pumpe (14). Anfallende Abluft (D) wird einer Abluftreinigungsanlage zugeführt.

In der Zeichnung sind unter Ziffer 7 eine Pumpe, Ziffer 9 eine Pumpe (Pervaporations-Feed-Pumpe), unter Ziffer 12 eine Pumpe (Vakuum-Pumpe), unter Ziffer 13 eine Pumpe (Permeat-Pumpe) wiedergegeben und unter Ziffer 10 ist die Pervaporation sowie unter Ziffer 11 der Permeat-Kondensator dargestellt.

In der Vorrichtung gemäß Fig. 2 ist die erfindungsgemäße Vorrichtung ohne Verwendung der Pervaporationsvorrichtung dargestellt.

In der Vorrichtung gemäß Fig. 3 sind mit 2a und 2 b die Vorratsbehälter für Triethanolamin und Calciumhydroxid bzw. Calciumoxid eingezeichnet. Mit 15 a sind die Rückstandsfässer für den Sumpfaustrag, mit 15 b der Behälter für die Wasserphase aus dem Abscheider 6 bezeichnet.

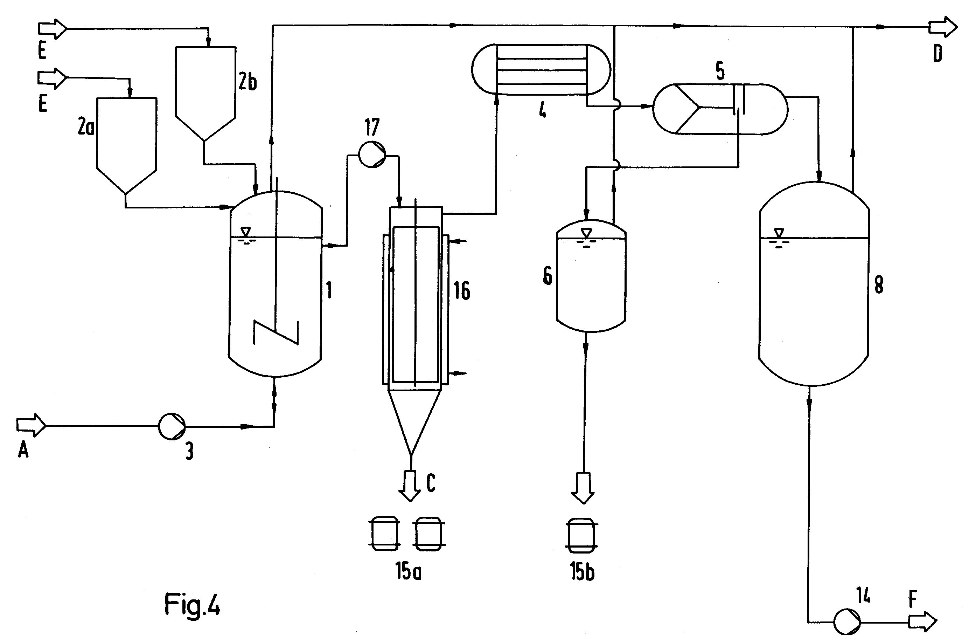

Die Vorrichtung gemäß Fig. 4 dient für die kontinuierliche Durchführung des erfindungsgemäßen Verfahrens. Hierbei ist mit 16 ein kontinuierlicher Verdampfer, vorzugsweise ein Dünnschichtverdampfer und mit 17 eine Pumpe zur Versorgung dieses Verdampfers mit dem Suspensionsgemisch aus Triethanolamin und Calciumhydroxid bzw. Calciumoxid bezeichnet.

## Patentansprüche

1. Verfahren zum Entfernen von Säuren aus organischen Lösemitteln oder Lösemittelgemischen, die aus Abluft oder Abgasen stammen, durch Behandlung mit alkalischen Reagenzien, dadurch gekennzeichnet, daß in einem Rührreaktor als alkalisches Reagens Calciumverbindungen, die ein Löslichkeitsprodukt in Wasser bei Raumtemperatur von mehr als (1,0 ± 0,5) x 10⁻¹¹ aufweisen, und/oder Amine und/oder quaternäre Ammoniumverbindungen in feinverteilter oder gelöster Form in der
1,05 bis 10-fachen stöchiometrischen Menge,
bezogen auf die Konzentration der anwesenden Säure und/oder Säuren, oder in einer derartigen Menge zugesetzt wird, daß das Lösemittel oder Lösemittelgemisch nach der Destillation eine Acidität zwischen
< 0,01 bis 10 meq H⁺/dm³
aufweist, mit den carbonsäurehaltigen, chlorkohlenwasserstoffarmen oder -freien organischen Lösemitteln oder Lösemittelgemischen vermischt und gut gerührt werden und anschließend das organische Lösemittel oder Lösemittelgemisch abgetrennt wird.

2. Verfahren nach Anspruch 1 dadurch gekennzeichnet, daß dem Lösemittel oder Lösemittelgemisch, bezogen auf die Konzentration der anwesenden Säure und/oder Säuren, das alkalische Reagenz bestehend aus Calciumverbindungen, Aminen und/oder quaternären Ammoniumverbindungen in der
1,1 bis 4-fachen stöchiometrischen Menge
oder in einer derartigen Menge zugesetzt wird, daß das Lösemittel oder Lösemittelgemisch nach der Destillation eine Acidität zwischen
< 0,1 bis 2 meq H⁺/dm³
aufweist.

3. Verfahren nach Anspruch 1 und 2, dadurch gekennzeichnet, daß während oder nach der Entfernung der Carbonsäuren die Trocknung des Lösemittels oder Lösemittelgemisches durch mindestens, eine azeotrope Desillation und/oder Pervaporation und/oder durch eine Sorption in einem derartigen Umfang durchgeführt wird, daß nach der Trocknung des Lösemittels oder Lösemittelgemisches der Endwassergehalt desselben zwischen
0,0001 bis 3,0 Mas.-%, vorzugsweise zwischen
0,001 bis 0,1 Mas.-%
liegt.

4. Verfahren nach einem oder mehreren der Ansprüche 1 bis 3, dadurch gekennzeichnet, daß das alkalische Reagenz aus Calciumoxid, Calciumhydroxid, Calciumacetat und/oder Gemischen aus Calciumoxid und/oder Calciumhydroxid und/oder Calciumacetat und Calciumcarbonat, Dolomit, gebranntem Dolomit und/oder Gemischen oder festen Lösungen aus einem oder mehreren dieser Erdalkalimetallverbindungen und/oder aus mindestens einem Amin und/oder einer quaternären Ammoniumverbindung bestehen, wobei die Korngröße der im festen Zustand eingesetzten alkalischen Reagenzien
kleiner als 500 µm, vorzugsweise
kleiner als 100 µm
ist und/oder eine spezifische Oberfläche aufweist, die über
0,5 m²/g, vorzugsweise über
20 m²/g,
liegt.

5. Verfahren nach einem oder mehreren der Ansprüche 1 bis 4, dadurch gekennzeichnet, daß vor der Entfernung der Carbonsäuren, das organische Lösemittel oder Lösemittelgemisch und/oder das alkalische Reagenz so eingestellt oder verwendet wird, daß der Gesamtwassergehalt des säurehaltigen Lösemittels (berechnet einschließlich des alkalischen Reagenz) mehr als
0,001 Mas.-%, vorzugsweise
0,0015 bis 2,0 Mas.-%,
beträgt, wobei die Einstellung vorzugsweise durch Zugabe einer zur Einstellung dieser Massenkonzentration erforderlichen Wassermenge und vorzugsweise bei Verwendung mindestens einer Calciumverbindung als alkalisches Reagenz erfolgt, wobei bevorzugt das zuzufügende Wasser aus der bei der azeotropen Destillation und/oder Pervaporation abgetrennten Wasserphase stammt oder verwendet wird.

6. Verfahren nach einem oder mehreren der Ansprüche 1 bis 5, dadurch gekennzeichnet, daß das als alkalisches Reagenz verwendete Amin aus der Gruppe der Amine 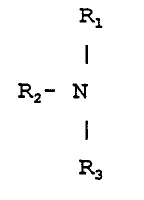 mit folgenden Restgruppen ausgewählt ist:
R₁ = R₂ = R₃ = CₙH₂ₙ₊₁ mit 3 ≦n ≦18
R₁ = CH₃, R₂ = R₃ = CₙH₂ₙ₊₁ mit 3 ≦n ≦18
R₁ = R₂ = R₃ = CₙH₂ₙOH mit 2 ≦n ≦3
R₁ = R₂ = R₃ = CH₂CH(OH)CH₃
R₁ = R₂ = R₃ = CH₂CH(OH)CH₂OH
R₁ = R₂ = CₙH₂ₙ₊₁ mit 3 ≦n ≦4, R₃ = CₙH₂ₙOH mit 2 ≦n ≦3
R₁ = CₙH₂ₙ₊₁ mit n = 4, R₂ = R₃ = CₙH₂ₙOH mit 2 ≦n ≦3
R₁ = R₂ = H, R₃ = CH₂-CH(OH) - CH₂ NH₂.

7. Verfahren nach einem oder mehreren der Ansprüche 1 bis 6, dadurch gekennzeichnet, daß als alkalisches Reagenz ein Gemisch aus
A) Calciumhydroxid und/oder Calciumoxid und
B) Triethanolamin
verwendet wird, wobei das Calciumhydroxid und/oder Calciumoxid in der 0,5 bis 5-fachen stöchiometrischen Menge, vorzugsweise in der 1 bis 3-fachen stöchiometrischen Menge, bezogen auf die Konzentration der anwesenden Säure(n), und das Triethanolamin in der 0,05 bis 5-fachen stöchiometrischen Menge, vorzugsweise in der 0,1 bis 3-fachen stöchiometrischen Menge, bezogen auf die Konzentration der anwesenden Säure(n), zugesetzt wird, wobei die Summe der beiden stöchiometrischen Faktoren gleich oder größer als 3 ist.

8. Verfahren nach einem oder mehreren der Ansprüche 1 bis 7, dadurch gekennzeichnet, daß gesättigte und/oder ungesättigte Mono- und/oder Di- und/oder Polycarbonsäuren mit C₁ bis C₂₂, vorzugsweise CₙH₂ₙ₊₁ COOH (n = 0 bis 18), HOOC-(CH₂)ₙ-COOH (n = 0 bis 10) und/oder Acrylsäure, Methacrylsäure, Crotonsäure, Ölsäure, Maleinsäure, Fumarsäure, Benzoesäure, Phtalsäure und/oder Substitutionsprodukte oder Derivate dieser Säuren, bei denen mindestens ein Wasserstoffatom der Kohlenstoffkette (des Säurerestes) substituiert ist, aus organischen Lösemitteln oder Lösemittelgemischen, die vorzugsweise Aldehyde, Ketone, Ether, Ester, Alkohole, Kohlenwasserstoffe und/oder halogenierte Kohlenwasserstoffe enthalten oder daraus bestehen, umgesetzt und abgetrennt werden, gegenüber diesen Säuren reaktiv wirkende Calciumverbindungen in Gegenwart eines bestimmten Wassergehaltes und/oder mindestens ein Amin oder mindestens eine quaternäre Ammoniumverbindung zugefügt und bei Temperaturen über + 10°C, vorzugsweise über + 15°C, mit der oder den Säure(n) umgesetzt und das organische Lösemittel oder Lösemittelgemisch nach einer Temperaturerhöhung von mehr als + 10°C, vorzugsweise mehr als + 20°C (gegenüber der Ausgangsreaktionstemperatur) in Gegenwart des im Überschuß zugefügten Reagenz oder der alkalischen Reagenzien abdestilliert wird und vorzugsweise anschließend oder nach Lagerung zur Verminderung des Wassergehaltes behandelt wird.

9. Vorrichtung zur Durchführung des Verfahrens nach Ansprüchen 1 bis 8, dadurch gekennzeichnet, daß sie aus einem, mit mindestens einem Brüdenkondensator (4) für das gereinigte, verdampfte Lösemittel oder Lösemittelgemisch, mindestens einem Abscheider (5) für das wasserhaltige Lösemittelgemisch, mindestens einem mit dem Destillatbehälter (8) verbundenen beheizbaren Reaktor (1), mindestens einer Reagenz-Vorlage (2) für das bzw. die zu verwendenden Reagenzien, mindetens einem Zwischenbehälter (6) für aus dem Lösemittel abgeschiedenes Wasser, ggf. einer Trocknungsvorrichtung (10) sowie mindestens einem Rückstandbehälter (15) besteht.

10. Vorrichtung nach Anspruch 9, dadurch gekennzeichnet, daß der Abscheider (5) für das gereinigte wasserhaltige Lösemittel oder Lösemittelgemisch in seinem unteren Teil über eine Rohrleitung mit dem Zwischenbehälter (6) und in seinem oberen Teil mit dem Destillatbehälter (8) für das reine Lösemittel oder Lösemittelgemisch verbunden ist.

11. Vorrichtung nach Anspruch 9 und 10, dadurch gekennzeichnet, daß an dem Reaktor eine Heizvorrichtung und eine Kühlvorrichtung angeordnet ist und der Reaktor mit mindestens einer Rührvorrichtung ausgestattet ist.

12. Vorrichtung nach einem oder mehreren der Ansprüche 9 bis 11, dadurch gekennzeichnet, daß mindestens eine Dosiervorrichtung an dem Reaktor (1), dem Reagenz-Vorlage-Behälter (2) und/oder an mindestens einer zwischen diesen befindlichen Rohrleitung angeordnet ist.

13. Vorrichtung nach einem oder mehreren der Ansprüche 9 bis 12, dadurch gekennzeichnet, daß zwischen der Trocknungsvorrichtung (10) und dem Zwischenbehälter (6) mindestens eine Rohrleitung angeordnet ist, damit das in der Trocknungseinrichtung (10) aus dem Lösemittel entfernte Wassser in den Zwischenbehälter (6) geleitet werden kann.

14. Vorrichtung nach einem oder mehreren der Ansprüche 9 bis 13, dadurch gekennzeichnet, daß der Zwischenbehälter (6) über mindestens eine Rohrleitung mit dem Reaktor (1) verbunden ist.

15. Vorrichtung nach einem oder mehreren der Ansprüche 9 bis 14, dadurch gekennzeichnet, daß zwischen dem Reaktor (1) und dem Brüdenkondensator (4) eine kontinuierliche Verdampfungsvorrichtung, vorzugsweise ein Dünnschichtverdampfer (16) angeordnet ist.

## Claims

1. A method for removing acids from organic solvents or solvent mixtures which originate from exhaust air or exhaust gases, by treatment with alkaline reagents, characterised in that in a stirred-tank reactor, as alkaline reagent, calcium compounds which have a solubility product in water at room temperature of more than (1.0 ± 0.5) x 10⁻¹¹, and/or amines and/or quaternary ammonium compounds in finely-distributed or dissolved form are added in
1.05 to 10 times the stoichiometric quantity,
relative to the concentration of the acid and/or acids present, or in such a quantity that the solvent or solvent mixture after distillation has an acidity between
< 0.01 and 10 meq H⁺/dm³,
are mixed with the organic solvents or solvent mixtures which contain carboxylic acid and are low in or free from chlorohydrocarbon and are stirred well and then the organic solvent or solvent mixture is separated off.

2. A method according to Claim 1, characterised in that the alkaline reagent consisting of calcium compounds, amines and/or quaternary ammonium compounds is added to the solvent or solvent mixture, relative to the concentration of the acid and/or acids present, in
1.1 to 4 times the stoichiometric quantity
or in such a quantity that the solvent or solvent mixture after distillation has an acidity of between
< 0.1 and 2 meq H⁺/dm³.

3. A method according to Claim 1 and 2, characterised in that during or after the removal of the carboxylic acids the drying of the solvent or solvent mixture is effected by at least one azeotropic distillation and/or pervaporation and/or by sorption to such an extent that after the drying of the solvent or solvent mixture the final water content thereof is between
0.0001 and 3.0 mass %, preferably between
0.001 and 0.1 mass %.

4. A method according to one or more of Claims 1 to 3, characterised in that the alkaline reagent consists of calcium oxide, calcium hydroxide, calcium acetate and/or mixtures of calcium oxide and/or calcium hydroxide and/or calcium acetate and calcium carbonate, dolomite, burned dolomite and/or mixtures or solid solutions of one or more of these alkaline earth metal compounds and/or of at least one amine and/or a quaternary ammonium compound, the grain size of the alkaline reagents used in the solid state being
less than 500 µm, preferably
less than 100 µm,
and/or having a specific surface area which is above
0.5 m²/g, preferably above
20 m²/g.

5. A method according to one or more of Claims 1 to 4, characterised in that before the removal of the carboxylic acids the organic solvent or solvent mixture and/or the alkaline reagent is set or used such that the total water content of the acid-containing solvent (calculated including the alkaline reagent) is more than
0.001 mass %, preferably
0.0015 to 2.0 mass %,
the setting preferably being effected by the addition of a quantity of water necessary for setting this mass concentration and preferably using at least one calcium compound as alkaline reagent, the water to be added preferably coming or being used from the water phase which has been separated off upon the azeotropic distillation and/or pervaporation.

6. A method according to one or more of Claims 1 to 5, characterised in that the amine used as alkaline reagent is selected from the group of amines 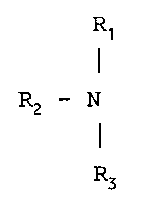 with the following residual groups:
R₁ = R₂ = R₃ = CₙH₂ₙ₊₁ with 3 ≦ n ≦ 18
R₁ = CH₃, R₂ = R₃ = CₙH₂ₙ₊₁ with 3 ≦ n ≦ 18
R₁ = R₂ = R₃ = CₙH₂ₙOH with 2 ≦ n ≦ 3
R₁ = R₂ = R₃ = CH₂CH(OH)CH₃
R₁ = R₂ = R₃ = CH₂CH(OH)CH₂OH
R₁ = R₂ = CₙH₂ₙ₊₁ with 3 ≦ n ≦ 4, R₃ = CₙH₂ₙOH with 2 ≦ n ≦ 3
R₁ = CₙH₂ₙ₊₁ with n = 4, R₂ = R₃ = CₙH₂ₙOH with 2 ≦ n ≦ 3
R₁ = R₂ = H, R₃ = CH₂-CH(OH) - CH₂ NH₂.

7. A method according to one or more of Claims 1 to 6, characterised in that a mixture of
A) calcium hydroxide and/or calcium oxide and
B) triethanolamine
is used as alkaline reagent, with the calcium hydroxide and/or calcium oxide being added in 0.5 to 5 times the stoichiometric quantity, preferably in 1 to 3 times the stoichiometric quantity, relative to the concentration of the acids(s) present, and the triethanolamine being added in 0.05 to 5 times the stoichiometric quantity, preferably in 0.1 to 3 times the stoichiometric quantity, relative to the concentration of the acids(s) present, the total of the two stoichiometric factors being equal to or greater than 3.

8. A method according to one or more of Claims 1 to 7, characterised in that saturated and/or unsaturated monocarboxylic and/or dicarboxylic and/or polycarboxylic acids with C₁ to C₂₂, preferably CₙH₂ₙ₊₁ COOH (n = 0 to 18), HOOC-(CH₂)ₙ-COOH (n = 0 to 10) and/or acrylic acid, methacrylic acid, crotonic acid, oleic acid, maleic acid, fumaric acid, benzoic acid, phthalic acid and/or substitution products or derivatives of these acids in which at least one hydrogen atom of the carbon chain (of the acid residue) is substituted, are reacted with organic solvents or solvent mixtures which preferably contain or consist of aldehydes, ketones, ethers, esters, alcohols, hydrocarbons and/or halogenated hydrocarbons and are separated, calcium compounds which are reactive with respect to these acids are added in the presence of a certain content of water and/or at least one amine or at least one quaternary ammonium compound and are reacted at temperatures above +10°C, preferably above +15°C, with the acid or acids and the organic solvent or solvent mixture after a temperature increase of more than +10°C, preferably more than +20°C (relative to the starting reaction temperature) being distilled off in the presence of the reagent added in excess or the alkaline reagents and preferably is then, or after storage, treated to reduce the water content.

9. An apparatus for performing the method according to Claims 1 to 8, characterised in that it consists of at least one vapour condenser (4) for the purified, evaporated solvent or solvent mixture, at least one separator (5) for the water-containing solvent mixture, at least one heatable reactor (1) connected to the distillate vessel (8), at least one reagent receiver (2) for the reagent or reagents to be used, at least one intermediate vessel (6) for water separated out of the solvent, optionally a drying device (10) and at least one residue vessel (15).

10. An apparatus according to Claim 9, characterised in that the separator (5) for the purified water-containing solvent or solvent mixture is connected in its lower part via a pipe to the intermediate vessel (6) and in its upper part to the distillate vessel (8) for the pure solvent or solvent mixture.

11. An apparatus according to Claim 9 and 10, characterised in that a heating device and a cooling device are arranged on the reactor and the reactor is equipped with at least one stirring device.

12. An apparatus according to one or more of Claims 9 to 11, characterised in that at least one metering device is arranged on the reactor (1), the reagent receiver vessel (2) and/or on at least one pipe located therebetween.

13. An apparatus according to one or more of Claims 9 to 12, characterised in that at least one pipe is located between the drying apparatus (10) and the intermediate vessel (6) so that the water removed from the solvent in the drying apparatus (10) can be passed into the intermediate vessel (6).

14. An apparatus according to one or more of Claims 9 to 13, characterised in that the intermediate vessel (6) is connected to the reactor (1) via at least one pipe.

15. An apparatus according to one or more of Claims 9 to 14, characterised in that a continuous evaporation apparatus, preferably a film evaporator (16), is arranged between the reactor (1) and the vapour condenser (4).

## Revendications

1. Procédé pour séparer et enlever des acides de solvants ou mélanges de solvants organiques provenant de l'air ou des gaz d'échappement, par traitement par des réactifs alcalins, procédé caractérisé en ce qu'on ajoute dans un réacteur comportant un dispositif d'agitation, à titre de réactif alcalin, des composés du calcium présentant un produit de solubilité dans l'eau, à la température ambiante, supérieur à (1,0 ± 0,5) x 10⁻¹¹, et/ou des amines et/ou des composés d'ammonium quaternaire sous forme finement répartie ou dissoute dans
1,05 à 10 fois la quantité stoéchiométrique,
par rapport à la concentration de l'acide et/ou des acides présent(s) ou en une quantité telle qu'après la distillation le solvant ou le mélange des solvants présente une acidité comprise entre
< 0,01 et 10 meq H⁺/dm³,
on mélange le réactif avec le solvant ou le mélange des solvants organiques contenant de l'acide carboxylique, pauvre ou dépourvu d'hydrocarbures chlorés, et l'on agite bien, puis l'on sépare le solvant ou le mélange des solvants organiques.

2. Procédé selon la revendication 1, caractérisé en ce qu'on ajoute au solvant ou au mélange des solvants, par rapport à la concentration de l'acide et/ou des acides présent(s), le réactif alcalin consistant en des composés du calcium, des amines et/ou des composés d'ammonium quaternaire, en une quantité représentant
1,1 à 4 fois la quantité stoéchiométrique
ou en une quantité telle que le solvant ou le mélange des solvants présente, après distillation, une acidité comprise entre
< 0,1 et 2 meq de H⁺/dm³ .

3. Procédé selon la revendication 1 et 2, caractérisé en ce que, pendant ou après l'enlèvement des acides carboxyliques, on effectue le séchage (c'est-à-dire l'enlèvement de l'eau) du solvant ou du mélange des solvants par au moins une distillation d'un azéotrope et/ou une perévaporation et/ou par une sorption, en une proportion telle qu'après le séchage (l'enlèvement de l'eau) du solvant ou du mélange des solvants, la teneur finale en eau du solvant ou du mélange des solvants se situe entre
0,0001 et 3,0 % en masse, avantageusement entre
0,001 et 0,1 % en masse.

4. Procédé selon une ou plusieurs des revendications 1 à 3, caractérisé en ce que le réactif alcalin consiste en de l'oxyde de calcium, de l'hydroxyde de calcium, de l'acétate de calcium et/ou des mélanges de l'oxyde de calcium et/ou de l'hydroxyde de calcium et/ou de l'acétate de calcium et du carbonate de calcium, de la dolomite, de la dolomite calcinée et/ou des mélanges ou des solutions solides d'un ou plusieurs de ces composés de métaux alcalino-terreux et/ou en au moins une amine et/ou en un composé d'ammonium quaternaire, la grosseur des grains des réactifs alcalins utilisés à l'état solide étant
inférieure à 500 µm, avantageusement
inférieure à 100 µm,
et/ou présente une surface spécifique supérieure
à 0,5 m²/g, avantageusement, supérieure
à 20 m²/g.

5. Procédé selon une ou plusieurs des revendications 1 à 4, caractérisé en ce que, avant l'enlèvement des acides carboxyliques, on ajuste ou utilise le solvant organique ou le mélange des solvants organiques et/ou le réactif alcalin de façon que la teneur totale en eau du solvant contenant de l'acide (calculée en tenant compte du réactif alcalin) soit supérieure à
0,001 % en masse, avantageusement comprise entre
0,0015 et 2,0 % en masse, l'ajustement étant avantageusement réalisé par addition d'une quantité d'eau nécessaire pour obtenir cette concentration en masse et avantageusement en utilisant au moins un composé de calcium à titre de réactif alcalin, l'eau à introduire provenant de préférence, ou étant utilisée, à partir de l'eau provenant de la phase aqueuse séparée lors de la distillation d'un azéotrope et/ou de la per-évaporation.

6. Procédé selon une ou plusieurs des revendications 1 à 5, caractérisé en ce que l'amine utilisée comme réactif alcalin est choisie dans l'ensemble formé par les amines : 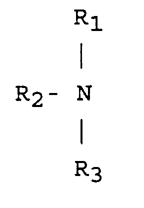 comportant les groupes de restes suivants :
R₁ = R₂ = R₃ = CₙH₂ₙ₊₁ avec 3 ≦ n ≦ 18
R_{1 =} CH₃, R₂ = R₃ = CₙH₂ₙ₊₁ avec 3 ≦ n ≦ 18
R₁ = R₂ = R₃ = CₙH₂ₙOH avec 2 ≦ n ≦ 3
R₁ = R₂ = R₃ = CH₂CH (OH)CH₃
R₁ = R₂ = R₃ = CH₂CH (OH)CH₂OH
R₁ = R₂ = CₙH₂ₙ₊₁ avec 3 ≦ n ≦ 4, R₃ = CₙH₂ₙOH avec 2≦ n ≦ 3
R₁ = CₙH₂ₙ₊₁ avec n = 4, R₂ = R₃ = CₙH₂ₙOH avec 2 ≦ n ≦ 3
R₁ = R₂ = H, R₃ = CH₂-CH(OH) - CH₂ NH₂.

7. Procédé selon une ou plusieurs des revendications 1 à 6, caractérisé en ce qu'on utilise comme réactif alcalin un mélange de :
A) de l'hydroxyde de calcium et/ou de l'oxyde de calcium, et
B) de la triéthanolamine,
l'hydroxyde de calcium et/ou l'oxyde de calcium étant ajouté(s) en une quantité représentant 0,5 à 5 fois la quantité stoéchiométrique, avantageusement 1 à 3 fois la quantité stoéchiométrique, par rapport à la concentration du ou des acides présent(s), l'on ajoute la triéthanolamine en une quantité représentant 0,05 à 5 fois la quantité stoéchiométrique, avantageusement 0,1 à 3 fois la quantité stoéchiométrique, par rapport à la concentration du ou des acides présent(s), la somme des deux facteurs stoéchiométriques étant égale ou supérieure à 3.

8. Procédé selon une ou plusieurs des revendications 1 à 7, caractérisé en ce qu'on fait réagir des acides monocarboxyliques et/ou dicarboxyliques et/ou polycarboxylique en C₁ à C₂₂, saturés et/ou insaturés avantageusement CₙH₂ₙ₊₁ COOH (n valant 0 à 18), HOOC-(CH₂)ₙ-COOH (n valant 0 à 10) et/ou l'acide acrylique, l'acide methacrylique, l'acide crotonique, l'acide oléique, l'acide maléique, l'acide fumarique, l'acide benzoïque, l'acide phtalique et/ou des produits de substitution ou des dérivés de ces acides dans lesquels au moins un atome d'hydrogène de la chaîne carbonée (du reste acide) est remplacé par substitution, et on les sépare de solvants ou de mélanges de solvants organiques qui, avantageusement, contiennent ou consistent en des aldéhydes, des cétones, des éthers, des esters, des alcools, des hydrocarbures et/ou des hydrocarbures halogénés, on y ajoute des composés du calcium pouvant réagir sur ces acides en présence d'une teneur déterminée en eau et/ou au moins une amine ou au moins un composé d'ammonium quaternaire, l'on fait réagir à des températures supérieures à +10°C, avantageusement supérieures à +15°C, avec le ou les acides et, après une élévation de température supérieure à +10°C, avantageusement supérieure à +20°C (par rapport à la température de départ du mélange réactionnel), on chasse par distillation le solvant ou le mélange des solvants organiques en présence du réactif introduit en excès ou des réactifs alcalins et, avantageusement ensuite ou après un magasinage, on traite pour diminuer la teneur en eau.

9. Dispositif pour la mise en oeuvre du procédé selon les revendications 1 à 8, caractérisé en ce qu'il consiste en au moins un condenseur (4) des vapeurs du solvant ou du mélange des solvants purifié(s) et évaporé(s), au moins un séparateur (5) du mélange des solvants contenant de l'eau, au moins un réacteur (1) pouvant être chauffé et qui est relié à un récipient (8) de distillat, au moins un réservoir (2) de réactif destiné à contenir le ou les réactifs à utiliser, au moins un récipient intermédiaire (6) destiné à recevoir l'eau séparée du solvant, éventuellement un dispositif (10) de séchage (ou d'enlèvement de l'eau) ainsi qu'au moins un récipient (15) pour le résidu.

10. Dispositif selon la revendication 9, caractérisé en ce que le séparateur (5) du solvant ou du mélange des solvants purifié(s) contenant de l'eau est relié à sa partie inférieure, par l'intermédiaire d'un conduit tubulaire, au récipient intermédiaire (6) et, à sa partie supérieure, avec le récipient (8) pour distillat destiné à recevoir le solvant ou le mélange des solvants pur(s).

11. Dispositif selon la revendication 9 et 10, caractérisé en ce qu'un dispositif de chauffage et un dispositif de refroidissement sont placés sur le réacteur et en ce que le réacteur est équipé d'au moins un dispositif d'agitation.

12. Dispositif selon une ou plusieurs des revendications 9 à 11, caractérisé en ce qu'au moins un dispositif d'introduction dosée est placé sur le réacteur (1), sur le récipient (2) réservoir de réactif et/ou sur au moins un conduit tubulaire se trouvant entre ces parties du dispositif.

13. Dispositif selon une ou plusieurs des revendications 9 à 12, caractérisé en ce qu'entre le dispositif (10) de séchage (enlèvement de l'eau) et le récipient intermédiaire (6), il y a au moins un conduit tubulaire permettant d'acheminer dans le récipient intermédiaire (6) l'eau séparée et enlevée du solvant dans le dispositif (10) de séchage par enlèvement de l'eau.

14. Dispositif selon une ou plusieurs des revendications 9 à 13, caractérisé en ce que le récipient intermédiaire (6) est relié par l'intermédiaire d'au moins un conduit tubulaire au réacteur (1).

15. Dispositif selon une ou plusieurs des revendications 9 à 14, caractérisé en ce qu'entre le réacteur (1) et le condenseur (4) des vapeurs, est disposé un dispositif d'évaporation en continu, avantageusement un évaporateur (16) de couche mince.
